(19) Europäisches Patentamt
European Patent Office
Office européen des brevets

(11) Publication number: **0 295 509 B1**

(12) **EUROPEAN PATENT SPECIFICATION**

(45) Date of publication of patent specification:
28.08.91 Bulletin 91/35

(51) Int. Cl.$^5$: **A23L 1/22**, A23L 1/231,
C11C 3/00, C11C 3/08

(21) Application number: **88108855.3**

(22) Date of filing: **03.06.88**

(54) **Production of flavour.**

(30) Priority: **17.06.87 US 63310**

(43) Date of publication of application:
**21.12.88 Bulletin 88/51**

(45) Publication of the grant of the patent:
**28.08.91 Bulletin 91/35**

(84) Designated Contracting States:
**AT BE CH DE FR GB GR IT LI LU NL SE**

(56) References cited:
**US-A- 3 961 083**
**US-A- 4 571 342**
**PATENT ABSTRACTS OF JAPAN, vol. 11, no.**
**184 (C-427)[2631], 12th June 1987; & JP - A - 62**
**6651 (MEIJI SEIKA KAISHA LTD.) 13-01-1987**

(73) Proprietor: **SOCIETE DES PRODUITS NESTLE S.A.**
**Case postale 353**
**CH-1800 Vevey (CH)**

(72) Inventor: **Chen, Teh-Kuei**
**Cedar Hill Road**
**Gaylordsville Conn. 06755 (US)**
Inventor: **Tandy, John Stewart**
**207A Blue Swamp Road**
**Litchfield Conn. 06759 (US)**

EP 0 295 509 B1

## Description

The present invention relates to a process for the preparation of a flavouring composition.

In United States Patent No. 4571342 there is described a process for the preparation of a flavouring composition with a charcoal broiled flavour which is prepared by subjecting a film of fat or oil to a temperature within the range of from 285°C to 475°C in the presence of oxygen for a period of time effective to develop a charcoal broiled flavour and collecting the resultant fat or oil.

We have now found, surprisingly, that individual fatty acids or mixtures thereof, when subjected in the presence of oxygen to temperatures similar to those used in the process described in United States Patent No. 4571342 produce flavouring compositions with characteristics specific to each individual fatty acid or mixture, these flavouring compositions being obtained not only from the treated fatty acid starting material but also from the volatile distillates formed during the treatment.

Accordingly, the present invention provides a process for the preparation of a flavouring composition which comprises subjecting a fatty acid or any mixture of two or more fatty acids to a temperature from 150°C to 475°C in the presence of oxygen and collecting the resultant treated fatty acid or the volatiles distilled therefrom.

The fatty acids employed may be saturated or unsaturated, may contain from 6 to 30 carbon atoms, preferably from 10 to 27 and especially from 16 to 24 carbon atoms. They may, for instance, be obtained from any edible triglyceride fat or oil by enzymatic, chemical or high temperature/pressure hydrolyses. Examples of suitable oils from which fatty acids may be obtained include safflower linseed, blackcurrant seed and grapeseed oils which are naturally rich in linoleic acid (64-78%), and olive oil, low erucic acid rapeseed oil and high oleic safflower oils which are naturally rich in oleic acid.

Fatty acids suitable for employment in the present invention include, for example, lauric acid, palmitic acid, stearic acid, oleic acid, linoleic acid which may be used individually or as mixtures. Particular fatty acid mixtures which are also suitable include butter acids, dairy acids, cheese acids, enzyme hydrolysed vegetable oils such as olive oil or coconut oil and enzyme hydrolysed animal fats. It is also possible to use a fatty acid which has been oxidised (.i.e. rancidified). e.g. 10-hydroperoxylinoleic acid.

In addition, the fatty acids can advantageously be used in admixture with triglycerides e.g. a mixture of beef fat and oleic acid, for instance, in a ratio of from 2 : 1 to 4 : 1 and a mixture of chicken fat and linoleic acid, for instance, in a ratio of from 2 : 1 to 6 : 1.

Moreover, if desired, flavour precursors may be added to the fatty acid prior to the heat treatment to enhance the flavour, e.g. sulphur containing compounds such as cysteine, cystine, methionine, thiamine, hydrogen sulphide, or sulphur containing extract from vegetables such as onions, garlic or members of the Brassica family.

Preferably, the temperature to which the fatty acids or mixtures thereof are subjected is from 250°C to 400°C and especially from 285°C to 350°C. The time of the treatment may be from a few seconds to several hours, more usually from 1 minute to 6 hours, and preferably from about 5 minutes to 4 hours. The actual period of time chosen may be the time effective to produce the desired flavour note, longer periods generally producing more smoked or charcoal cooked notes.

The flavourants created by the process of the present invention depend on the fatty acid material employed. For example, oleic acid or a mixture of fatty acids containing predominantly oleic acid have a strong beef-like character while linoleic acid or a mixture of fatty acids containing predominantly linoleic acid have a strong roasted chicken or fish character.

Several types of apparatus may be used for the preparation of the flavourant. For example, a thin film reactor similar to that used in United States Patent No. 4571342 may be employed and such apparatus would also include pipe reactors, etc., where a thin film of the fatty acid material is passed down the sides of a heated pipe while air or oxygen is passed through the pipe : when such an apparatus is used, the fatty acid material that passes through the pipe is collected and used as the flavourant. However, in the present invention the use of a batch-type apparatus fitted with gas inlet and outlet ports is especially advantageous because by using such an apparatus in which the starting material is in the form of a liquid pool (not a film such as a thin layer, sheet or droplets and particularly not a film with a thickness of less than 5 mm), usually lying at the bottom of the reactor, not only can the treated fatty acid material be used as a flavourant but also the volatiles distilled or carried by the air flow out of the reactor can be collected by a suitable collecting means and used as a flavourant. In addition, distillates offer the advantage of fractionating the volatiles with time to produce a broader range of flavourants, each having a different flavour, which can be used either individually or in combination with other fractions to obtain an even broader range of flavourants. Moreover, there is usually a significant amount of water distilled over with the volatiles generated in a batch-type apparatus and if this water is separated from the volatiles, it can also be used as a flavourant. Thus, by varying the initial fatty acid material employed, the reaction temperature, the intervals of time used for collecting the volatiles and the specific combinations of the fractions, a myriad number of flavour notes can be generated from a single fatty acid. In addition, two or more fractions obtained from different processes according to this invention may be used as flavourants. The collection of the volatiles distilled may be achieved by any effective conventional means such as a cold trap, a condensor or a water trap. If desired, several traps may be used. For example, when a condensor is used, it may be cooled, for instance, to from 4-10°C by circulating water or refrigerant through it.

By the process of the present invention, flavours can be obtained which can be specifically targeted towards a wide variety of meats, chicken, fish or cheese depending on the starting fatty acid material employed, the temperature used and, if a batch-type apparatus is used, the specific times that the volatile fractions are taken as well as the combinations of the fractions. The batch-type apparatus is advantageously a vessel capable of sustaining the high temperatures involved e.g. a bomb reactor.

The oxygen present in the treatment is conveniently obtained from air, and the quantity required depends on the method employed to produce the flavourant. Generally the air is passed through the fatty acid material at a rate of from 1 to 5000 ml/min per 100 g fatty acid material. However, since many thin film reactors have sufficient air/oxygen in them, when a pipe reactor is used, either no additional air or only a small amount of air is generally satisfactory, e.g. up to 100 ml/min per 100 g fatty acid material, especially when the flavourant is the recovered treated fatty acid material. When a batch-type apparatus is used, the air is preferably passed through at a rate of from 10 to 5000 ml/min and especially from 15 to 3000 ml/min per 100 g fatty acid material. The use of pressure, or pressurised reactions to provide sufficient oxygen, is not excluded.

The flavouring composition produced by the process of the present invention may be used in the powdered form which may be obtained by spray drying in admixture with carriers which can encapsulate the flavouring composition, e.g. gum arabic, malto-dextrin modified, food starches, dextrins or a protein such as gelatin. Advantageously, a solution or an emulsion of the flavouring composition and carrier is formed which is dried, for example, by spray-drying. The amount of flavouring composition present is usually from 5% to 50% and preferably from 15% to 30% by weight based on the total weight of the flavouring composition and the carrier. Since the distillates produced in a batch-type reactor are very volatile, preferably the techniques used to encapsulate them should substantially inhibit reactions which might take place with other materials the flavourant may subsequently be blended with.

The flavouring composition can be used by itself, dispersed in a fat, or in admixture with a carrier, for incorporation into, or coating onto a wide variety of foodstuffs to impart the specific flavour e.g. meats, sauces, soups etc.

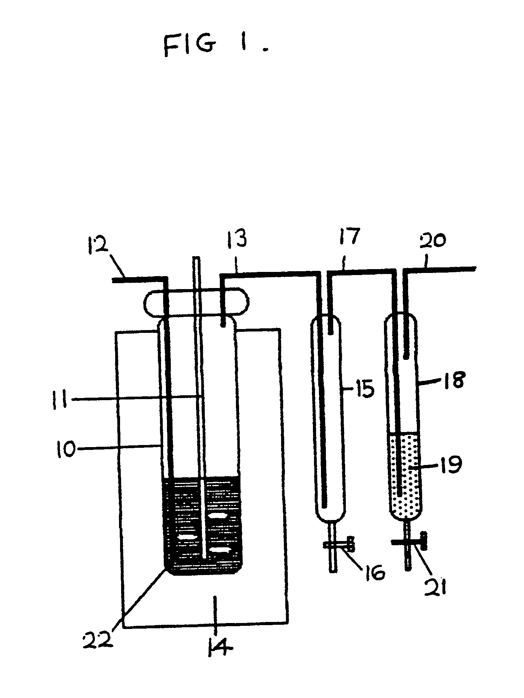

The present invention will now be further illustrated by way of example with reference to the accompanying drawing in which Figure 1 represents a bomb apparatus which may be employed as the reactor.

Referring to Figure 1, the apparatus comprises a 600 ml bomb 10, fitted with a stirrer 11, an air inlet 12 and an air outlet 13, surrounded by a bomb jacket 14 provided with a heating element (not shown). The air outlet 13 passes into the top of a cold trap 15 fitted with a tap 16 and an air outlet 17 which in turn passes into the top of a cold water trap 18 containing 400 ml water 19 and fitted with an air outlet 20 to the atmosphere and a tap 21. Both traps 15 and 18 are maintained at a temperature of 4°C by being immersed in ice-baths (not shown).

In operation, 100 g of fatty acid material 22 is introduced into the bomb and air is passed at 2000 ml/min through the air inlet 12 and bubbled through the fatty acid material which is agitated by the stirrer 11 and heated to the appropriate temperature. The air outlet 13 allows the passage of the air and the volatiles distilled from the fatty acid material by gas "stripping", into the cold trap 15. Any volatiles which pass cold trap 15 can be further collected in the cold trap 18 by passing through the air outlet 17.

The volatiles collected in the cold trap 15 are further fractionated by time whereby all the volatile material distilled from the bomb 10 into the cold trap 15 between 0 and 5 minutes is run off from the tap 16 and collected as one flavourant, the volatiles distilled into the trap between 5 and 10 minutes are collected as a second flavourant, those between 10 and 15 minutes are collected as a third flavourant, etc., and further fractions collected until no further volatiles are generated from the bomb. Each fraction collected has a different flavour. A significant amount of water distils over with the fat-soluble volatiles generated in the bomb and this water is separated to give a further flavourant. The volatile material which is collected in the water trap 18 is run off from tap 21 and collected to give yet another flavour.

The following Examples further illustrate the present invention

Example 1

100 g oleic acid was placed in a bomb and heated to 300°C. Air was passed in at 100 ml/min and bubbled through the material and trapped in a cold water trap. After 30 minutes at 300°C the material was cooled and removed from the bomb. The treated oleic acid material was then evaluated as follows :

Three samples were prepared in which the following ingredients were weighed into separate containers as follows :

a)    2.14 grams of a hydrolysed plant protein
b)    2.10 grams of the hydrolysed plant protein used in (a) and 0.04 grams of oleic acid which had not been subjected to the high temperature treatment of the present invention and,
c)    2.10 grams of the hydrolysed plant protein used in (a) and 0.04 grams of the oleic acid treated as in Example 1.

All three samples were hydrated separately with 180 ml of boiling water. A tasting panel found that only sample (c) had an excellent roast beef dripping character while sample (b) had a slightly more fatty character than sample (a) but did not have the beef or the roast character.

Example 2

By following a similar procedure to that described in Example 1 but using linoleic acid instead of the oleic acid there used, a flavouring composition with a roasted chicken skin character was produced.

Example 3

200 grams of water used as a cold water trap as described in Example 1 were heated to 90°C and 83.2 grams of malto-dextrin and 83.2 grams of gum arabic were added to it while mixing in a high shear mixer. Then 33.2 grams of the oleic acid flavouring material obtained by the process described in Example 1 were added and the mixture was homogenised and spray dried.

A tasting panel found that the dried powder (either alone or in a blend consisting of 2.1 grams of hydrolysed plant protein and 0.25 grams of the dried powder had the same excellent roast beef character as the starting material.

Example 4

Using the apparatus illustrated in Figure 1, 150 g of oleic acid were placed in the bomb and the bomb sealed. The oleic acid was heated to 325°C with stirring and air passed through at 3000 ml/min. Five minutes after the temperature had reached 325°C the material collected in the cold trap was removed, the water layer separated from the fatty layer, and the fatty layer labelled Fraction 1. When 10 minutes had elapsed the material was again removed from the cold trap, the water separated, and the fatty layer labelled Fraction 2. The fractions 3, 4 and 5 were collected every 5 minutes until no further material was collected from the bomb. The water layers from each fraction were pooled into one fraction and labelled Water Phase.

0.02 grams of each flavourant were mixed with 2.0 grams of hydrolysed plant protein and hydrated with 180 ml of boiling water. 0.02 grams of the water phase were mixed with the same amount of HPP and boiling water. 0.02 grams from the water trap were mixed in the same fashion. The results of a tasting panel were as follows :

| ORGANOLEPTIC EVALUATION : | DESCRIPTION |
|---|---|
| Water trap | grilled beef |
| Water Phase | bloody beef |
| Fraction 1 | braised beef |
| Fraction 2 | roast beef |
| Fraction 3 | steak-like beef |
| Fraction 4 | roasted beef |
| Fraction 5 | roast beef (well done) |

Further these fractions were combined in various ratios to provide specific flavour character of a variety of applications, such as a beef au jus dehydrated mix.

## Example 5

Using the apparatus illustrated in Figure 1, 100 g of oleic acid were placed in the bomb and the bomb sealed. The oleic acid was heated to 325°C with stirring and air passed through at 1830 ml/min. Two minutes after the temperature had reached 325°C, the material collected in the cold trap was removed, the water layer separated from the fatty layer, and the fatty layer labelled fraction 1. When 4 minutes had elapsed, the material was again removed from the cold trap, the water separated, and the fatty layer labelled fraction 2. The fractions were collected until no further material was collected from the bomb. The water layers from each fraction were pooled into one fraction and labelled water phase.

0.02 grams of each flavourant was mixed with 2.2 grams of hydrolysed plant protein (FIDCO's BN-10) and hydrated with 180 ml of boiling water. 0.01 grams of water phase was mixed with the same amount of HPP and boiling water.

0.01 grams of water trap were mixed in the same fashion. The yield from each fraction and the organoleptic evaluation of respective fractions with BN-10 as described above are summarised below :

| Fraction | Time(min) | Yield(g) | Descrip. of Organoleptic Evaluation |
|---|---|---|---|
| 2 | 2-4 | 9.1 | Braised beef |
| 3 | 4-9 | 23.4 | Charcoal broiled steak |
| 4 | 9-17 | 15.8 | Roasted beef |
| 5 | 17-27 | 11.9 | Roasted beef (well done) |
| water phase | | 6.1 | Bloody beef |
| TOTAL YIELD | | 72.7 (72,7%) | |
| water trap | | | Grilled beef |

Further, these fractions were combined in various ratios to provide specific beef flavour characters to a variety of applications such as a beef au jus dehydrated mix.

Adding 15% of the last fraction to either fraction 2 or fraction 3 created a sliced roast beef flavour to the HPP base.

## Example 6

By following a similar procedure to that described in Example 5 but using a commercial food grade oleic acid containing 75% oleic acid and 6% linoleic acid, a comparable series of flavours was produced.

## Example 7

By following a similar procedure to that described in Example 5 but using a commercial food grade tallow fatty acid containing 42% oleic acid and 5% linoleic acid, a comparable series of products was produced.

## Example 8

150 g of oleic acid was heated to 325°C for 3 hours in the presence of air as described in example 5, but the air flow rate was 670 ml/min. The applications of these fractions of HPP were carried out and evaluated in the same fashion as in Example 1. The results are summarised as follows :

| Fraction | Time(min) | Yield(g) | Descrip. of Organoleptic Evaluation |
|----------|-----------|----------|-------------------------------------|
| 1 | 0-25 | 4.8 | Green and fatty |
| 2 | 25-85 | 9.6 | Buttery |
| 3 | 85-130 | 18.5 | Charcoal broiled steak with roasted |
| 4 | 130-180 | 18.3 | Roasted beef |
| water phase | | 19.7 | Bloody beef |
| TOTAL YIELD | | 70.9 (47.3%) | |
| water trap | | | Grilled beef |

Example 9

Linoleic acid (100 g) was heated to 325°C in the presence of air as described in Example 5 with the same air flow rate of 1830 ml/min. 0.02 grams of each fractionated flavourant was mixed with 2.2 grams of HPP base chicken flavour (FIDCO'S Spectra SBT and CBH chicken flavour) hydrated and evaluated as described in Example 1. The results are summarised as follows :

| Fraction | Time(min) | Yield(g) | Descrip. of Organoleptic Evaluation |
|----------|-----------|----------|-------------------------------------|
| 1 | 0-5 | 5.2 | With the exception of |
| 2 | 5-9 | 9.1 | fraction 1, all |
| 3 | 9-20 | 17.4 | fractions improved the |
| 4 | 20-32 | 8.0 | meaty chicken flavour, |
| 5 | 32-45 | 4.7 | especially fraction 3 and 4. Fraction 5 also imparted a roasted chicken note. |
| water phase | | 4.4 | Bloody & meaty |
| TOTAL YIELD | | 48.8(48.8%) | |
| water trap | | | Grilled and meaty |

Similar results were obtained when chicken fatty acids, commercial linoleic acids obtained from soy, and black currant fatty acids were heated, processed and evaluated the same way. The total yield range was 40-55%.

Example 10

100 g of pork fat fatty acids were heated to 325°C in the presence of air as described in Example 5 with the same air flow rate of 1830 ml/min. 0.02 grams of each fractionated flavourant was mixed with 2.2 grams of pork flavour (FIS'5SF 331 pork flavour) and hydrated with 180 ml boiling water, whereupon the pork character of the flavourant was greatly enhanced ("FIS" is a Registered Trade Mark).

Example 11

By following a similar procedure to that described in Example 10, but using 100 g of a mixture containing 4.5 parts oleic acid and 1 part linoleic acid, the pork character of the flavourant was greatly enhanced.

Example 12

A process similar to that of Example 9 was followed except that black currant seed fatty acids and linseed oil fatty acids were used as precursors.

When the product fractions from pyrolysis of black currant fatty acids and linseed fatty acids were applied on a bland base of soup, it imparted a baked fish flavour to the soup. Fraction 2 gave the best baked fish flavour.

Example 13

A process similar to that of Example 5 was followed except that 1800 ml of air was bubbled through the material and the reaction carried out for 15 minutes at 325°C. All of the material that was distilled from the bomb was used as the flavourant. Following separation of the water layer, the oil soluble material had a strong roast beef character when evaluated at 0.002 grams in 2.2 grams Spectra BN-10.

**Claims**

1. A process for the preparation of a flavouring composition which comprises subjecting a fatty acid or any mixture of two or more fatty acids to a temperature of 150°C to 475°C in the presence of oxygen and collecting the resultant treated fatty acid or the volatiles distilled therefrom.

2. A process according to claim 1 characterised in that the fatty acids employed contain from 6 to 30 carbon atoms.

3. A process according to claim 1 characterised in that the fatty acid employed is lauric acid, palmitic acid, stearic acid, oleic acid or linoleic acid or any mixture thereof.

4. A process according to claim 1 characterised in that the mixtures of fatty acids employed are butter acids, dairy acids, cheese acids, enzyme hydrolysed vegetable oils or enzyme hydrolysed animal fats.

5. A process according to claim 1 characterised in that the fatty acid employed may be treated in admixture with a triglyceride.

6. A process according to claim 1 characterised in that a flavour precursor is added to the fatty acid prior to the heat treatment to enhance the flavour.

7. A process according to claim 6 characterised in that the flavour precursor is cysteine, cystine, methionine, thianine, hydrogen sulphide or a sulphur containing extract from onions, garlic or members of the Brassica family.

8. A process according to claim 1 characterised in that the temperature to which the fatty acids or mixtures thereof are subjected is from 250°C to 400°C.

9. A process according to claim 1 characterised in that the oxygen is obtained from air flowing through the fatty acid material at a rate of from 1 to 5000 ml/min per 100 g of fatty acid material.

10. A process according to claim 1 characterised in that the treatment is carried out in a batch-type apparatus provided with gas inlet and outlet ports and means for collecting the volatiles distilled.

11. A process according to claim 1 characterised in that the treatment is carried out in a batch-type apparatus provided with gas inlet and outlet ports wherein volatiles are distilled through the outlet port and collected by a collecting means, and wherein oxygen enters the gas inlet port, exits from the gas outlet port and passes through the collecting means before being vented to the atmosphere.

12. A process according to claim 10 characterised in that the collecting means is provided by a cold trap and a cold water trap wherein the gas exiting from the gas outlet port passes through the cold trap and the cold water trap before being vented to the atmosphere.

13. A process according to claim 10 characterised in that the batch-type apparatus is a bomb reactor.

14. A process according to claim 10 characterised in that the starting material is in the form of a liquid pool.

15. A process according to claim 10 characterised in that the time of the treatment is from 1 minute to 6 hours.

16. A process according to claim 10 characterised in that the air passes through the fatty acid material at a rate of from 10 to 5000 ml/min per 100 g fatty acid material.

17. A process according to claim 10 characterised in that the volatiles are fractionated from the collecting means with time to produce a number of different flavourants.

18. A process according to claim 10 characterised in that the volatiles are fractionated from the collecting means with time to produce a number of different flavourants any two or more of which are mixed.

19. A process according to claim 10 characterised in that water which distils over with the volatiles is separated from the volatile fractions to produce flavourants which may optionally be mixed.

20. A process according to claim 12 characterised in that the volatiles which pass the cold trap and enter the cold water trap are collected with the water in the cold water trap to produce a flavourant.

21. A process according to claim 1 characterised in that two or more fractions obtained from different processes according to claim 1 are mixed to produce a flavourant.

22. A process according to claim 1 characterised in that the flavouring composition produced is admixed with a carrier.

23. A process according to claim 22 characterised in that a solution or emulsion of the mixture of the flavouring composition and carrier is prepared which is dried by spray drying.

24. A process according to claim 22 characterised in that the amount of flavouring composition present is from 15% to 30% by weight based on the total weight of the flavouring composition and carrier.

25. A process according to claim 1 characterised in that the flavouring composition produced is incorporated into, or coated onto, a foodstuff either by itself, dispersed in a fat or in admixture with a carrier.


## Patentansprüche

1. Verfahren zur Herstellung einer Aromazusammensetzung, welches ein Aussetzen einer Fettsäure oder eines beliebigen Gemisches von zwei oder mehreren Fettsäuren einer Temperatur von 150°C bis 475°C in Gegenwart von Sauerstoff und ein Sammeln der resultierenden behandelten Fettsäure oder der davon abdestillierten flüchtigen Bestandteile umfaßt.

2. Verfahren nach Anspruch 1, dadurch gekennzeichnet, daß die eingesetzten Fettsäuren 6 bis 30 Kohlenstoffatome enthalten.

3. Verfahren nach Anspruch 1, dadurch gekennzeichnet, daß die eingesetzte Fettsäure Laurinsäure, Palmitinsäure, Stearinsäure, Ölsäure oder Leinölsäure oder ein beliebiges Gemisch hievon ist.

4. Verfahren nach Anspruch 1, dadurch gekennzeichnet, daß die eingesetzten Gemische von Fettsäuren Buttersäuren, Milchsäuren, Käsesäuren, enzymhydrolysierte Pflanzenöle oder enzymhydrolysierte Tierfette sind.

5. Verfahren nach Anspruch 1, dadurch gekennzeichnet, daß die eingesetzte Fettsäure im Gemisch mit einem Triglycerid behandelt werden kann.

6. Verfahren nach Anspruch 1, dadurch gekennzeichnet, daß zu der Fettsäure vor der Wärmebehandlung ein Aromavorläufer zugesetzt wird, um das Aroma zu verstärken.

7. Verfahren nach Ansprruch 6, dadurch gekennzeichnet, daß der Aromavorläufer Cystein, Cystin, Methionin, Thiamin, Schwefelwasserstoff oder ein schwefelhaltiger Extrakt aus Zwiebeln, Knoblauch oder Gliedern der Brassica-Familie ist.

8. Verfahren nach Anspruch 1, dadurch gekennzeichnet, daß die Temperatur, welcher die Fettsäuren oder deren Gemische unterworfen werden, 250°C bis 400°C beträgt.

9. Verfahren nach Anspruch 1, dadurch gekennzeichnet, daß der Sauerstoff aus Luft erhalten wird, die das Fettsäurematerial mit einem Durchsatz von 1 bis 5.000 ml/min je 100 g Fettsäurematerial durchströmt.

10. Verfahren nach Anspruch 1, dadurch gekennzeichnet, daß die Behandlung in einer ansatzweise betriebenen Vorrichtung ausgeführt wird, die mit Gaseinlaß- und Gasauslaßöffnungen und mit Mitteln zum Auffangen der abdestillierten flüchtigen Bestandteile ausgerüstet ist.

11. Verfahren nach Anspruch 1, dadurh gekennzeichnet, daß die Behandlung in einer Vorrichtung zum ansatzweisen Betrieb ausgeführt wird, die mit Gaseinlaß- und Gasauslaßöffnungen versehen ist, worin flüchtige Bestandteile durch die Auslaßöffnung abdestilliert und mit Sammelmitteln aufgefangen werden und worin Sauerstoff durch die Gaseinlaßöffnung eintritt und aus der Gasauslaßöffnung austritt und durch die Auffangmittel durchtritt, bevor er in die Atmosphäre entweicht.

12. Verfahren nach Anspruch 10, dadurch gekennzeichnet, daß die Auffangmittel durch eine Kühlfalle und eine Kaltwasserfalle gebildet werden, wobei das aus der Gasauslaßöffnung austretende Gas durch die Kühlfalle und die Kaltwasserfalle durchtritt, bevor es in die Atmosphäre entweichen gelassen wird.

13. Verfahren nach Anspruch 10, dadurch gekennzeichnet, daß die ansatzweise betriebene Vorrichtung eine Reaktorbombe ist.

14. Verfahren nach Anspruch 10, dadurch gekennzeichnet, daß das Ausgangsmaterial in Form eines flüssigen Ansatzes vorliegt.

15. Verfahren nach Anspruch 10, dadurch gekennzeichnet, daß die Behandlungsdauer eine Minute bis 6 Stunden beträgt.

16. Verfahren nach Anspruch 10, dadurch gekennzeichnet, daß die Luft mit einem Durchsatz von 10 bis 5.000 ml/min je 100 g Fettsäurematerial durch das Fettsäurematerial geführt wird.

17. Verfahren nach Anspruch 10, dadurch gekennzeichnet, daß die flüchtigen Bestandteile aus dem Auffangmittel im Verlauf der Zeit zur Ausbildung mehrerer verschiedener Aromen fraktioniert werden.

18. Verfahren nach Anspruch 10, dadurch gekennzeichnet, daß die flüchtigen Bestandteile aus dem Auffangmittel im Verlauf der Zeit zur Ausbildung mehrerer verschiedener Aromen fraktioniert werden, von denen beliebige zwei oder mehrere vermischt werden.

19. Verfahren nach Anspruch 10, dadurch gekennzeichnet, daß das mit den flüchtigen Bestandteilen überdestillierende Wasser von den Fraktionen der flüchtigen Bestandteile abgetrennt wird, um Aromen zu bilden, die gewünschtenfalls vermischt werden können.

20. Verfahren nach Anspruch 12, dadurch gekennzeichnet, daß die die Kühlfalle durchsetzenden und in die Kaltwasserfalle eintretenden flüchtigen Bestandteile mit dem Wasser in der Kaltwasserfalle zur Ausbildung eines Aromas gesammelt werden.

21. Verfahren nach Anspruch 1, dadurch gekennzeichnet, daß zwei oder mehrere, aus verschiedenen Verfahren gemäß Anspruch 1 erhaltene Fraktionen zur Ausbildung eines Aromas vermischt werden.

22. Verfahren nach Anspruch 1, dadurch gekennzeichnet, daß die gebildete Aromazusammensetzung mit einem Träger vermischt wird.

23. Verfahren nach Anspruch 22, dadurch gekennzeichnet, daß eine Lösung oder eine Emulsion des Gemisches aus der Aromazusammensetzung und dem Träger bereitet wird, die durch Sprühtrocknen getrocknet wird.

24. Verfahren nach Anspruch 22, dadurch gekennzeichnet, daß die Menge an vorliegender Aromazusammensetzung 15 bis 30 Gew.-%, bezogen auf das Gesamtgewicht aus Aromazusammensetzung und Träger, ausmacht.

25. Verfahren nach Anspruch 1, dadurch gekennzeichnet, daß die gebildete Aromazusammensetzung in ein Nahrungsmittel entweder als solche, dispergiert in einem Fett oder im Gemisch mit einem Träger eingearbeitet oder auf das Nahrungsmittel aufgebracht wird.

**Revendications**

1. Procédé de préparation d'une composition aromatisante, qui consiste à soumettre un acide gras ou n'importe quel mélange de deux ou plus de deux acides gras à une température de 150°C à 475°C en présence d'oxygène et à recueillir l'acide gras traité résultant ou bien les substances volatiles séparées de cet acide gras par distillation.

2. Procédé suivant la revendication 1, caractérisé en ce que les acides gras utilisés contiennent 6 à 30 atomes de carbone.

3. Procédé suivant la revendication 1, caractérisé en ce que l'acide gras utilisé est l'acide laurique, l'acide palmitique, l'acide stéarique, l'acide oléique ou l'acide linoléique, ou bien un quelconque mélange de ces acides.

4. Procédé suivant la revendication 1, caractérisé en ce que les mélanges d'acides gras utilisés sont les acides du beurre, les acides de produits laitiers, les acides du fromage, des huiles végétales ayant subi une hydrolyse enzymatique ou bien des matières grasses animales ayant subi une hydrolyse enzymatique.

5. Procédé suivant la revendication 1, caractérisé en ce que l'acide gras utilisé peut être traité en mélange avec un triglycéride.

6. Procédé suivant la revendication 1, caractérisé en ce qu'un précurseur d'arôme est ajouté à l'acide gras avant le traitement thermique pour accroître l'arôme.

7. Procédé suivant la revendication 6, caractérisé en ce que le précurseur d'arôme est la cystéine, la cystine, la méthionine, la thionine, l'hydrogène sulfuré ou un extrait, contenant du soufre, d'oignon, d'ail ou d'espèces du genre Brassica.

8. Procédé suivant la revendication 1, caractérisé en ce que la température à laquelle les acides gras ou mélanges d'acides gras sont soumis est comprise dans l'intervalle de 250°C à 400°C.

9. Procédé suivant la revendication 1, caractérisé en ce que l'oxygène est obtenu par écoulement d'air à travers la matière à base d'acides gras à une vitesse de 1 à 5000 ml/minute pour 100 g de matière à base d'acides gras.

10. Procédé suivant la revendication 1, caractérisé en ce que le traitement est conduit dans un appareil à fonctionnement discontinu, muni d'orifices d'admission et de sortie de gaz et de moyens permettant de recueillir les substances volatiles distillées.

11. Procédé suivant la revendication 1, caractérisé en ce que le traitement est conduit dans un appareil à fonctionnement discontinu, muni d'orifices d'admission et de sortie de gaz, dans lequel les substances volatiles sont distillées à travers l'orifice de sortie et recueillies par un collecteur, et dans lequel l'oxygène pénètre par l'orifice d'admission de gaz, sort par l'orifice de sortie de gaz et passe à travers le collecteur avant d'être évacué dans l'atmosphère.

12. Procédé suivant la revendication 10, caractérisé en ce que le collecteur est muni d'un piège cryogénique et d'un piège à eau froide dans lesquels le gaz sortant par l'orifice de sortie de gaz passe à travers le piège cryogénique et le piège à eau froide avant d'être évacué dans l'atmosphère.

13. Procédé suivant la revendication 10, caractérisé en ce que l'appareil à fonctionnement discontinu est un réacteur autoclave.

14. Procédé suivant la revendication 10, caractérisé en ce que la matière de départ est sous forme d'un volume de liquide.

15. Procédé suivant la revendication 10, caractérisé en ce que le temps de traitement va de 1 minute à 6 heures.

16. Procédé suivant la revendication 10, caractérisé en ce que l'air passe à travers la matière à base d'acides gras à une vitesse de 10 à 5000 ml/minute pour 100 g de matière à base d'acides gras.

17. Procédé suivant la revendication 10, caractérisé en ce que les substances volatiles sont fractionnées dans le collecteur au cours du temps pour produire un certain nombre d'agents aromatisants différents.

18. Procédé suivant la revendication 10, caractérisé en ce que les substances volatiles sont fractionnées dans le collecteur au cours du temps pour produire un certain nombre d'agents aromatisants différents, deux ou plus de deux quelconques de ces agents aromatisants étant mélangés.

19. Procédé suivant la revendication 10, caractérisé en ce que l'eau qui distille avec les substances volatiles est séparée des fractions volatiles pour produire des agents aromatisants qui peuvent être facultativement mélangés.

20. Procédé suivant la revendication 12, caractérisé en ce que les substances volatiles qui traversent le piège cryogénique et pénètrent dans le piège à eau froide sont recueillies avec l'eau dans le piège à eau froide pour produire un agent aromatisant.

21. Procédé suivant la revendication 1, caractérisé en ce que deux ou plus de deux fractions obtenues par des procédés différents suivant la revendication 1 sont mélangées pour produire un agent aromatisant.

22. Procédé suivant la revendication 1, caractérisé en ce que la composition aromatisante produite est mélangée à un véhicule.

23. Procédé suivant la revendication 22, caractérisé en ce qu'il est préparé une solution ou émulsion du mélange de la composition aromatisante et du véhicule, qui est déshydratée par séchage par pulvérisation.

24. Procédé suivant la revendication 22, caractérisé en ce que la quantité de composition aromatisante présente est comprise dans l'intervalle de 15% à 30% en poids, sur la base du poids total de la composition aromatisante et du véhicule.

25. Procédé suivant la revendication 1, caractérisé en ce que la composition aromatisante produite est incorporée à, ou appliquée sous forme de revêtement sur, un produit alimentaire, telle quelle, dispersée dans une matière grasse ou bien en mélange avec un véhicule.

FIG 1.